# EUROPEAN PATENT APPLICATION

(11) **EP 4 603 929 A1**
(43) Date of publication of application: **20.08.2025**
(21) Application number: 25153922.7
(22) Date of filing: 24.01.2025
(51) Int. Cl.: G05B 19/18, G06F 21/60, H04L 9/40, H04L 67/12

(54) **DATA MANAGEMENT SYSTEM FOR YARN SPINDLE PRODUCT**

(30) Priority: 18.02.2024 CN 202410181863
(71) Applicant: Zhejiang Hengyi Petrochemical Co., Ltd., Zhejiang 311200 (CN); Fujian Yijin Chemical Fiber Co., Ltd., Quanzhou City, Fujian 362256 (CN); Suqian Yida New Material Co., Ltd., Suqian Jiangsu 223804 (CN)
(72) Inventor: PENG, Xiantao, Hangzhou, 311200 (CN); WANG, Peng, Hangzhou, 311200 (CN); QIU, Yibo, Hangzhou, 311200 (CN); LI, Dake, Hangzhou, 311200 (CN); XU, Feng, Hangzhou, 311200 (CN); WU, Xuan, Hangzhou, 311200 (CN); GAO, Jiabo, Hangzhou, 311200 (CN)
(74) Representative: Bittner, Bernhard

(57) **Abstract**

Provided is a data management system, including work node sets and data aggregation servers corresponding one by one to multiple work stages in a spinning workflow; where a first work node set includes M work nodes (11, 12, 13) corresponding one by one to M groups of operating devices in a first work stage; each work node is configured to obtain work data to be processed and process the work data to be processed into encrypted work data; the first work node set is configured to obtain first combined data; and a first data aggregation server among the multiple data aggregation servers is configured to receive the first combined data, decrypt M pieces of encrypted work data included in the first combined data one by one to obtain M pieces of work data to be processed, combine and then encrypt the M pieces of work data to be processed.

## Description

### TECHNICAL FIELD

The present disclosure relates to the field of data processing technology, and in particular to the fields of data encryption, chemical fiber data processing and others; and specifically to a data management system for a yarn spindle product.

### BACKGROUND

In the chemical fiber industry, the automated production of yarn spindle products requires the use of a variety of operating devices, and the entire production process includes a plurality of work stages, each of which involves numerous links, so there are a large quantity of data transmission processes. Since the backward inference may be performed from the production data of yarn spindle products to obtain data such as the production capacity, quality and sales of chemical fiber yarns, it is necessary to consider how to encrypt the data of yarn spindle products during the production process containing a large quantity of data transmission processes.

### SUMMARY

The present disclosure provides a data management system for a yarn spindle product to solve or alleviate one or more technical problems in the related art.

The present disclosure provides a data management system for a yarn spindle product, including a plurality of work node sets and a plurality of data aggregation servers corresponding one by one to a plurality of work stages in a spinning workflow;
where a first work node set corresponding to a first work stage in the spinning workflow among the plurality of work node sets includes M work nodes corresponding one by one to M groups of operating devices in the first work stage; and each of the M work nodes is configured to obtain work data to be processed according to operating status of the yarn spindle product in a group of operating devices corresponding to the work node, and process the work data to be processed into encrypted work data; where M is an integer greater than or equal to 2;
the first work node set is configured to obtain first combined data, where the first combined data includes M pieces of encrypted work data obtained based on processing by the M work nodes;
a first data aggregation server corresponding to the first work stage among the plurality of data aggregation servers is configured to receive the first combined data, and decrypt the M pieces of encrypted work data included in the first combined data one by one to obtain M pieces of work data to be processed; and
the first data aggregation server is further configured to combine and then encrypt the M pieces of work data to be processed to obtain second combined data of the first work stage, and send the second combined data to a work node set or data aggregation server corresponding to a second work stage in the spinning workflow.

The beneficial effects of the technical solution provided in the present disclosure at least include: in each work stage of production of the yarn spindle product, the work node encrypts the work data to be processed of the yarn spindle product detected by the operating device to obtain the encrypted work data. The data aggregation server receives the first combined data including a plurality of pieces of encrypted work data, decrypts the plurality of pieces of encrypted work data one by one to obtain a plurality of pieces of work data to be processed, combines and then encrypts the plurality of pieces of work data to be processed to obtain the second combined data, and sends the second combined data to a next work stage, so that the data of the yarn spindle product in the plurality of work stages can be encrypted to ensure the security of the data of the yarn spindle product during transmission.

It should be understood that the content described in this part is not intended to identify critical or essential features of embodiments of the present disclosure, nor is it used to limit the scope of the present disclosure. Other features of the present disclosure will be easily understood through the following description.

### BRIEF DESCRIPTION OF THE DRAWINGS

In the accompanying drawings, the same reference numbers represent the same or similar parts or elements throughout the accompanying drawings, unless otherwise specified. These accompanying drawings are not necessarily drawn to scale. It should be understood that these accompanying drawings only depict some embodiments provided according to the present disclosure, and should not be considered as limiting the scope of the present disclosure.
FIG. 1 is a schematic diagram of an application scenario of a data management system for a yarn spindle product according to an embodiment of the present disclosure;
FIG. 2 is a schematic block diagram of a data management system for a yarn spindle product according to an embodiment of the present disclosure;
FIG. 3 is a schematic diagram of an application scenario of a data management system for a yarn spindle product according to another embodiment of the present disclosure;
FIG. 4 is a schematic block diagram of a data management system for a yarn spindle product according to another embodiment of the present disclosure; and
FIG. 5 is a schematic block diagram of a work node according to an embodiment of the present disclosure.

### DETAILED DESCRIPTION

The present disclosure will be described below in detail with reference to the accompanying drawings. The same reference numbers in the accompanying drawings represent elements with identical or similar functions. Although various aspects of the embodiments are shown in the accompanying drawings, the accompanying drawings are not necessarily drawn to scale unless specifically indicated.

In addition, in order to better illustrate the present disclosure, numerous specific details are given in the following specific implementations. Those having ordinary skill in the art should understand that the present disclosure may be performed without certain specific details. In some examples, methods, means, elements and circuits well known to those having ordinary skill in the art are not described in detail, in order to highlight the subject matter of the present disclosure.

In order to facilitate understanding of the data management system for the yarn spindle product in the embodiments of the present disclosure, the application scenario of the system will be exemplarily illustrated below. In the data processing application scenario of the yarn spindle product, the production process of the yarn spindle product includes a plurality of work stages. For each work stage, a large quantity of operating devices are deployed in a production workshop and equipped with corresponding data management devices. The data management devices may be integrated onto the operating devices or may be independent devices.

In the related art, a plurality of data management devices in one work stage are used to transmit and complete data packets in the work stage. Specifically, the yarn spindle product will be processed by a plurality of operating devices in one work stage, and information in the processing process will be recorded by the data management device corresponding to each operating device and recorded as work data. Each data management device receives a data packet sent by the previous data management device, decrypts the data packet, adds work data of the corresponding operating device to the data packet, and encrypts and then sends the data packet. For example, the first data management device may encrypt work data of the corresponding operating device and transmit the encrypted data to the second data management device; the second data management device needs to decrypt the received encrypted data, and combine the obtained decrypted data with the work data of the operating device corresponding to the second data management device and then encrypt them for transmission to the third data management device; and so on. The relevant data of each yarn spindle product can be collected and transmitted in one work stage, and finally the complete data packet of the work stage is transmitted to the data management device of the next work node. However, the data management device needs to decrypt data during data transmission, which will affect the security of the data.

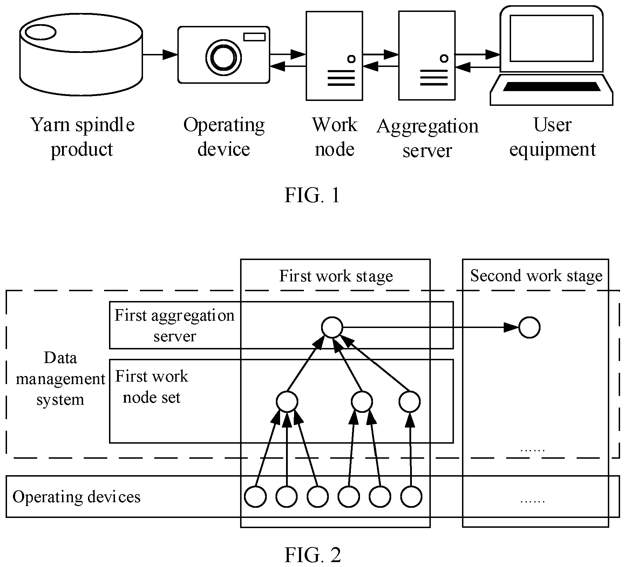

In order to solve the above problem, an embodiment of the present disclosure provides a data management system for a yarn spindle product. FIG. 1 is a schematic diagram of the data management system for the yarn spindle product according to the embodiment of the present application. In the embodiment of the present disclosure, the data management device for each work stage of the yarn spindle product may include: a work node and an aggregation server. The work node is connected to and serves in the same workflow as an operating device, and is configured to collect relevant data on the operating status of the operating device. Specifically, the process information of the yarn spindle product processed by the operating device is recorded as work data. A plurality of work nodes in one work stage are connected to one aggregation server, the data is transmitted to the aggregation server, and the aggregation server transmits the data to a data management device of a next work stage.

In the embodiment of the present disclosure, the operating device may include a device that acts on the yarn spindle in the workflow, the work node may obtain work data to be processed based on the operating status of the yarn spindle product in a group of operating devices corresponding to the work node, and then the work node may encrypt the work data to be processed to obtain the encrypted work data. The plurality of work nodes perform encryption separately, to obtain a plurality of pieces of encrypted work data. The aggregation server may obtain the first combined data containing a plurality of pieces of encrypted data, decrypt the first combined data one by one to obtain a plurality of pieces of work data to be processed, combine and then encrypt the plurality of pieces of work data to be processed to obtain the second combined data of the work stage, and send the second combined data to the next work stage, so that the data of the work stage can be aggregated and then encrypted and transmitted to the next work stage.

According to the method of the embodiment of the present disclosure, the data management system for the yarn spindle product is set up in the application scenario, and the decryption, combination and encryption of data can be completed by the aggregation server without the need for the data management device to decrypt the data, ensuring the security of the data. Optionally, the aggregation server may also interact with a user equipment, through which the second combined data may be viewed and decrypted, thereby realizing various management functions related to the data of the yarn spindle product.

Optionally, the user equipment may also send an encrypted task set to the aggregation server; the aggregation server may decrypt the encrypted task set and encrypt tasks one by one, and send the encrypted tasks to the corresponding work nodes respectively; and the work nodes may decrypt the tasks and distribute them to the operating devices to execute the tasks.

As shown in FIG. 2, the data management system for the yarn spindle product in the embodiment of the present disclosure includes: a plurality of work node sets and a plurality of data aggregation servers corresponding one by one to a plurality of work stages (such as a first work stage and a second work stage) in a spinning workflow;
where a first work node set corresponding to a first work stage in the spinning workflow among the plurality of work node sets includes M work nodes corresponding one by one to M groups of operating devices in the first work stage; and each of the M work nodes is configured to obtain work data to be processed according to operating status of the yarn spindle product in a group of operating devices corresponding to the work node, and process the work data to be processed into encrypted work data; where M is an integer greater than or equal to 2;
the first work node set is configured to obtain first combined data, where the first combined data includes M pieces of encrypted work data obtained based on processing by the M work nodes;
a first data aggregation server corresponding to the first work stage among the plurality of data aggregation servers is configured to receive the first combined data, and decrypt the M pieces of encrypted work data included in the first combined data one by one to obtain M pieces of work data to be processed; and
the first data aggregation server is further configured to combine and then encrypt the M pieces of work data to be processed to obtain second combined data of the first work stage, and send the second combined data to a work node set or data aggregation server corresponding to a second work stage in the spinning workflow.

In the embodiment of the present disclosure, the spinning workflow can be understood as the working process from the beginning of spinning to the final delivery of yarn spindles from the warehouse in the chemical fiber industry. The main types of fiber yarns involved in the spinning workflow in the solution of the embodiment of the present disclosure may include one or more of Partially Oriented Yarns (POY), Fully Drawn Yarns (FDY), or Draw Textured Yarns (DTY) (or called low-elastic yarns), etc. For example, the types of yarns may specifically include Polyester Partially Oriented Yarns, Polyester Fully Drawn Yarns, Polyester Drawn Yarns, and/or Polyester Draw Textured Yarns, etc.

The spinning workflow may include a plurality of work stages, and the plurality of work stages may include all work stages of the spinning workflow or may include some work stages of the spinning workflow. For each work stage, the data management device arranged in the data management system may include a work node set and a data aggregation server corresponding to the work stage. Optionally, the security of the aggregation server is relatively high. For example, the security of the aggregation server may be improved by restricting access rights to the aggregation server, deploying a firewall, and regularly performing security audit and log analysis on the aggregation server, etc.

The operating devices in the work stages may include devices for operating the yarn spindle product. For example, in the doffing stage of the yarn spindle, the operating devices may include a winder, a doffer, and/or a yarn receiving station, etc.; in the spinning work stage, the operating device may include a spinning box; and in the inspection stage of the yarn spindle, the operating devices may include an image acquisition device for detecting the quality of the yarn spindle, and a device for automatically identifying defects.

In some embodiments, the plurality of work stages may include at least one of: doffing of yarn spindle, inspection of yarn spindle, packaging of yarn spindle, warehousing of yarn spindle, or delivery of yarn spindle.

Taking one work stage for example, the first work stage includes a first work node set and a first data aggregation server. The first work stage may be any one of the following work stages: doffing of yarn spindle, inspection of yarn spindle, packaging of yarn spindle, warehousing of yarn spindle, or delivery of yarn spindle. The first work node set may include M groups of operating devices and M work nodes, where M is an integer greater than or equal to 2. Each group of operating devices corresponds to each work node, the M groups of operating devices may include devices operating the yarn spindle in the first work stage, and each group of operating devices may include at least one operating device. As shown in FIG. 2A, three groups of operating devices and three work nodes may be set up. The first group of operating devices corresponding to the first work node may include three operating devices (such as winders), and the first work node is responsible for recording the operating status of the three operating devices; the second group of operating devices corresponding to the second work node may include two operating devices (such as doffers), and the second work node is responsible for recording the operating status of the two operating devices; the third group of operating devices corresponding to the third work node may include one operating device (such as a yarn receiving station), and the third work node is responsible for recording the operating status of the operating device.

Each work node in the work node set may obtain the operating status of a corresponding group of operating devices on the yarn spindle product, thereby obtaining the work data to be processed of the yarn spindle product. The work node may be an independent device, for example, the work node may include a camera, a sensor, or other device for detecting operating devices. The work data to be processed obtained by the work node may include relevant data of the yarn spindle product in the first work stage, such as the quality, type and weight of each yarn spindle product. The work node may also be a data management device integrated on an operating device, such as a chip or module dedicated to recording data in the operating device; and the work data to be processed obtained by the work node may include relevant data of the operating device in the first work stage, such as the number, position and specification of the operating device corresponding to each yarn spindle product.

Exemplarily, when the first work stage is doffing of yarn spindles, two groups of operating devices may be included: one group of operating devices are trolleys for transporting yarn spindle products, and the other group of operating devices are winders for winding the fiber yarns in the yarn spindle products to complete doffing. Each of one group of trolleys and one group of winders correspond to one work node, and both work nodes may include relevant data of the yarn spindle products in the first work stage, such as the quality, type and weight of each yarn spindle product. The data to be processed of one work node may include the number, position and specification of the trolley corresponding to each yarn spindle product, and the data to be processed of the other work node may include the number, position and specification of the winder corresponding to each yarn spindle product.

Taking a work node for example, a first work node among a plurality of work nodes may encrypt the work data to be processed to obtain the encrypted work data. When the work data to be processed includes a plurality of pieces of data, the first work node may encrypt the plurality of pieces of data one by one, or the first work node may combine and then encrypt the plurality of pieces of data. The specific encryption method may be any encryption method in the relevant technology, such as blockchain encryption, and/or quantum encryption, etc.

The first work node set may obtain data consisting of M pieces of encrypted work data obtained based on processing by the M work nodes, that is, the first work node set obtains the first combined data, which may include the encrypted work data corresponding to all the work data to be processed in the first work stage. Exemplarily, as shown in FIG. 2, since each work node in the first work node set processes and obtains its own encrypted work data respectively, the first work node set may output the first combined data to the outside. Optionally, as shown in FIG. 2, each node in the first work node set may output its own encrypted work data to the outside respectively, thereby realizing the output of the first combined data to the outside. Alternatively, each node in the first work node set may pass the encrypted work data obtained by itself to the next work node set, so that the last work node set obtains all the encrypted work data, and the last work node outputs the first combined data to the outside.

The first data aggregation server among the plurality of data aggregation servers may obtain the first combined data of the first work stage, decrypt a plurality of pieces of encrypted work data in the first combined data one by one to obtain the work data to be processed, and combine and then encrypt the work data to be processed to obtain the second combined data. Specifically, the second combined data is data obtained by combining and then encrypting the work data to be processed (i.e., the decrypted data), and the first combined data is data obtained by separately encrypting and then combining the work data to be processed. Since the second combined data has a large amount of data, the second combined data is more secure than the first combined data. The output of the work data of the first work stage to the next work stage in the form of the second combined data can ensure the security of data transmission between work stages. Since the relevant data of the yarn spindle product is generated sequentially in each group of operating devices in each work stage of the spinning workflow, each piece of work data to be processed in the first combined data is generated sequentially and needs to be transmitted. Therefore, in order to obtain the second combined data, inevitably the aggregation and encryption need to be performed after decryption in the data management system. In the related art, a work node often decrypts the data of the previous work node and adds the data of the current work node before encryption and transmission. Frequent decryption is required and the high cost is incurred to ensure the security of each work node. In the embodiment of the present disclosure, the security of the aggregation server is improved. For example, the security of the aggregation server may be improved by restricting access rights to the aggregation server, deploying a firewall, and regularly performing security audit and log analysis on the aggregation server, etc. The aggregation server accomplishes the decryption of data, rather than decrypting data by each work node, avoiding data leakage when data is frequently decrypted, and ensuring the security of data while reducing the cost to a certain extent.

The first data aggregation server may send the second combined data of the first work stage to the work node set or data aggregation server corresponding to the second work stage in the spinning workflow. The first work stage and the second work stage are different work stages in the spinning workflow for the same batch of yarn spindle products. The second work stage may be the next work stage of the first work stage. The first work stage and the second work stage may include relevant data of the same yarn spindle product, such as the batch number and type of each yarn spindle product. The first work stage and the second work stage may include data related to different operating devices operating the yarn spindle product. Specifically, the data processing methods of the work node set and the data aggregation server in the second work stage can refer to the corresponding processes in the first work stage, and will not be described in detail here.

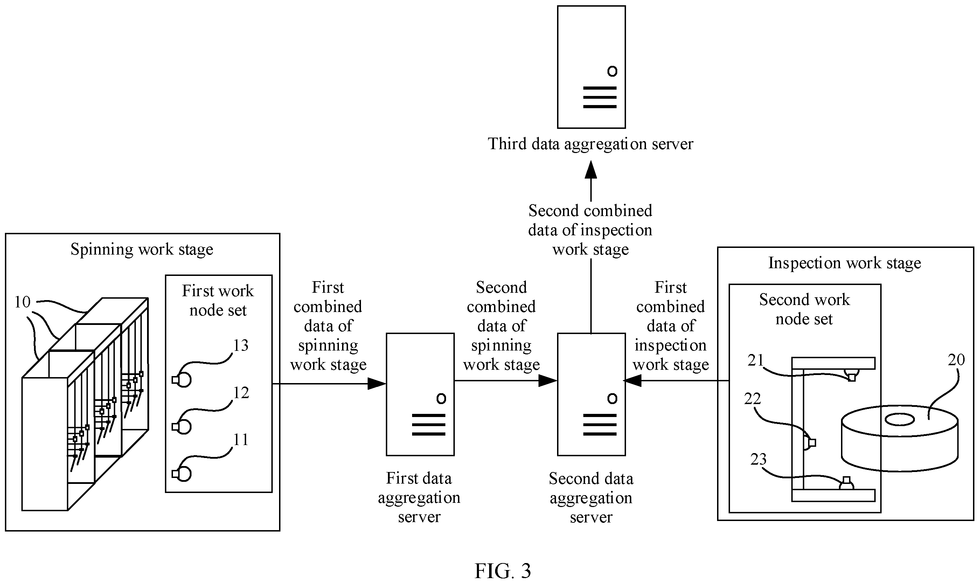

As shown in FIG. 3, the first work stage may be a spinning work stage, the operating devices may include three spinning boxes 10, and the first work node set may include work nodes 11 to 13, through which the relevant data of the corresponding spinning boxes 10 (for example, the numbers of the three spinning boxes 10) may be obtained respectively as the work data to be processed. The work nodes 11 to 13 may respectively process the work data to be processed into the encrypted work data. The first work node set may combine the encrypted work data of the work nodes 11 to 13 to obtain the first combined data, and send the first combined data to the first data aggregation server. The first data aggregation server may decrypt the encrypted work data related to the three spinning boxes 10 in the first combined data one by one, to obtain the work data to be processed related to the three spinning boxes 10. The first data aggregation server combines and then encrypts the work data to be processed related to the three spinning boxes 10 to obtain the second combined data of the spinning work stage, and sends the second combined data of the spinning work stage to the second data aggregation server corresponding to the second work stage. The yarn spindle 30 obtained by the three spinning boxes 10 may enter the inspection work stage, that is, the second work stage may be the inspection work stage. The quality of the yarn spindle 20 needs to be detected, and the operating device corresponding to the second work stage may be the yarn spindle 20. The second work node set may include work nodes 21 to 23, through which the relevant data of the surface, side surface and bottom surface of the yarn spindle 20 may be collected respectively as the work data to be processed. The work nodes 21 to 23 may respectively process the work data to be processed into the encrypted work data. The second work node set may combine the encrypted work data of the work nodes 21 to 23 to obtain the first combined data, and send the first combined data of the inspection work stage to the second data aggregation server. The second data aggregation server may decrypt the encrypted work data of the surface, side surface and bottom surface of the yarn spindle 20 included in the first combined data one by one, to obtain the work data to be processed of the surface, side surface and bottom surface of the yarn spindle 20. The second data aggregation server may decrypt the second combined data of the spinning work stage to obtain the work data to be processed related to the three spinning boxes 10. The second data aggregation server may combine and then encrypt the work data to be processed related to the three spinning boxes 10 in the spinning work stage and the work data to be processed of the surface, side surface and bottom surface of the yarn spindle 20 in the inspection work stage, to obtain the second combined data of the inspection work stage. The second data aggregation server may send the second combined data to the work node set or data aggregation server corresponding to the next work stage. Optionally, the second combined data of the spinning work stage may be combined with the second combined data of the inspection work stage and then sent to a third data aggregation server.

As can be seen, according to the technical solution of the embodiment of the present disclosure, the work node can encrypt the work data to be processed of the yarn spindle product detected by the corresponding operating device, and the data aggregation server can receive the first combined data including a plurality of pieces of encrypted work data processed by a plurality of work nodes, decrypt the plurality of pieces of encrypted work data one by one to obtain a plurality of pieces of work data to be processed, combine and then encrypt the plurality of pieces of work data to be processed to obtain the second combined data, and send the second combined data to the next work stage, so that the data of the yarn spindle product in the plurality of work stages can be encrypted to ensure the security of the data of the yarn spindle product during transmission. Also, the data aggregation server has higher security, and the decryption of data is completed by the data aggregation server, avoiding data leakage when data is decrypted, and ensuring the security of the data.

In some embodiments, the first combined data is transmission data of an M-th work node (i.e., the last work node) among the M work nodes; and
an i-th work node among the M work nodes is further configured to obtain transmission data of the i-th work node based on encrypted work data processed by the i-th work node and transmission data sent by an (i-1)-th work node among the M work nodes, and send the transmission data of the i-th work node; where i is an integer not less than 2 and not greater than M.

In the solution of the embodiments of the present disclosure, i is greater than or equal to 2 and less than or equal to M. That is to say, in a work node set, starting from the second work node, the encrypted work data of each work node will be combined with the transmission data of the previous node to obtain the transmission data of the current work node. The work node may send transmission data to the first data aggregation server or the next work node. For example, when i<M, the i-th work node may send transmission data to the (i+1)-th (next) work node; when i=M, the i-th work node may send transmission data to the first data aggregation server, and the transmission data is the first combined data, including M pieces of encrypted work data processed respectively by the M work nodes.

In some embodiments, a first work node among the M work nodes is configured to use encrypted work data processed by the first work node as transmission data of the first work node, and send the transmission data of the first work node to a second work node among the M work nodes.

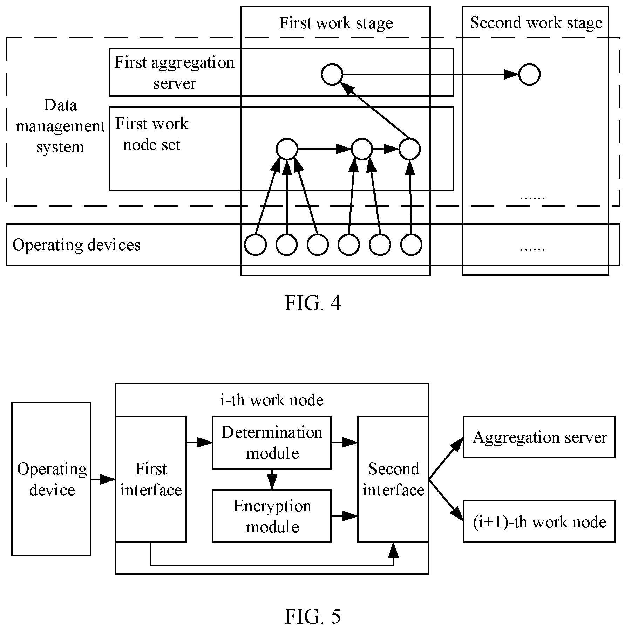

As shown in FIG. 4, the first work node may process the work data to be processed of the first work node to obtain the encrypted work data of the first work node, and send the encrypted work data of the first work node to the second work node; the second work node may process the work data to be processed of the second work node to obtain the encrypted work data of the second work node, combine the encrypted work data of the second work node and the first work node to obtain the transmission data, and send the transmission data to the third work node; and the third work node may process the work data to be processed of the third work node to obtain the encrypted work data of the third work node, combine the encrypted work data of the third work node with the transmission data to obtain the first combined data, and send the first combined data to the first aggregation server.

According to the technical solution of the embodiments of the present disclosure, the encrypted work data (transmission data) of the i-th work node and the transmission data of the (i-1)-th work node can be combined and sent to the (i+1)-th work node or the first data aggregation server. There is no need to decrypt the data during data transmission, avoiding data leakage when the data is decrypted, thereby further improving the security of the data of the yarn spindle product during transmission. Also, for a single-spindle yarn spindle product, i.e., in the single-spindle data stream, it is necessary to record the operating status of the yarn spindle product in various devices, for example, it is necessary to record which winder, which doffer and which yarn receiving station the yarn spindle product is processed in, and it is necessary to record the inspection result of the yarn spindle product. The data in the whole process is generated gradually and depends on the production batch number, yarn spindle number and other information transmitted from the previous link. Therefore, using the above embodiment, each work node combines the received transmission data (including the encrypted work data of the work node processed previously) with its own encrypted work data and then sends them, so that the data can be transmitted sequentially in each work node while ensuring security.

In some embodiments, the i-th work node is configured to determine a plurality of pieces of work data of the yarn spindle product according to operating status of the yarn spindle product in a group of operating devices corresponding to the i-th work node, and use work data corresponding to a target data type among the plurality of pieces of work data as work data to be processed.

The target data type may be a data type preset by a user, and the work data corresponding to the target data type may be used as the work data to be processed, that is, the work data corresponding to the target data type may be encrypted.

For example, data such as the doffing time, quality, type and weight of the yarn spindle product may be used as the target data type, and the work data corresponding to the doffing time, quality, type and weight of the yarn spindle product may be encrypted.

According to the technical solution of the embodiments of the present disclosure, the work data corresponding to the target data type in the work data can be encrypted, improving the efficiency of data encryption, and reducing the computing power requirement for data encryption.

In some embodiments, the transmission data of the i-th work node includes the encrypted work data processed by the i-th work node, the transmission data sent by the (i-1)-th work node, and other work data than work data corresponding to a target type among a plurality of pieces of work data determined by the i-th work node.

In actual applications, other work data than the work data corresponding to the target type may be the number, position and specification of the operating device corresponding to the yarn spindle product. Such the work data may not be encrypted, and may be directly combined with the encrypted work data as the transmission data of the i-th work node.

As shown in FIG. 5, the work node includes a first interface, a determination module, an encryption module and a second interface. The first interface is configured to determine a plurality of pieces of work data of the yarn spindle product according to the operating status of the yarn spindle product in a group of operating devices corresponding to the work node, and the first interface is connected to the determination module. The determination module is configured to take the work data corresponding to the target data type among the plurality of pieces of work data as the work data to be processed, and the determination module is connected to the encryption module. The encryption module is configured to encrypt the work data to be processed to obtain the encrypted work data, and the encryption module is connected to the second interface. The second interface is also connected to the first interface and the determination module. The second interface is configured to combine the encrypted work data, other work data than the work data corresponding to the target type, and the transmission data of the (i-1)-th work node, to obtain the transmission data of the i-th work node; and transmit the transmission data to the (i+1)-th work node or an aggregation server.

According to the technical solution of the embodiments of the present disclosure, the transmission data of the i-th work node may further include other work data than the work data corresponding to the target type among a plurality of pieces of work data, all the work data of the work node can be transmitted to ensure the integrity of the transmitted data, and each piece of encrypted work data is associated with other work data (such as number, etc.) to achieve the full lifecycle record for each yarn spindle product. Also, the transmission data of the i-th work node and the transmission data of the (i-1)-th work node can be combined and sent to the (i+1)-th work node or the first data aggregation server. There is no need to decrypt the data during data transmission, avoiding data leakage when the data is decrypted, and thereby further improving the security of the data of the yarn spindle product during transmission.

In some embodiments, each work node uses a first encryption algorithm to process the work data to be processed into the encrypted work data; the first data aggregation server uses a second encryption algorithm to combine and then encrypt the M pieces of work data to be processed; and the first encryption algorithm is different from the second encryption algorithm.

In the solution of the embodiments of the present disclosure, the feature that the first encryption algorithm is different from the second encryption algorithm can be understood as: the encryption types of the first encryption algorithm and the second encryption algorithm are different. For example, the first encryption algorithm may be a one-way hash encryption algorithm, and the second encryption algorithm may be a symmetric encryption algorithm. The first encryption algorithm and the second encryption algorithm may also be encryption algorithms of the same type with different configuration data. The security is further improved by setting different encryption algorithms.

In some embodiments, the first encryption algorithm includes a first one-way hash encryption algorithm, a first symmetric encryption algorithm or a first asymmetric encryption algorithm.

In some embodiments, the second encryption algorithm includes a second one-way hash encryption algorithm, a second symmetric encryption algorithm or a second asymmetric encryption algorithm.

It can be understood that the first one-way hash encryption algorithm and the second one-way hash encryption algorithm, the first symmetric encryption algorithm and the second symmetric encryption algorithm, and the first asymmetric encryption algorithm and the second asymmetric encryption algorithm are encryption algorithms of the same type with different configuration data.

According to the technical solution of the embodiments of the present disclosure, the work node and the data aggregation server can use different encryption algorithms to encrypt data, further improving the security of the data of the yarn spindle product during transmission.

In some embodiments, the data management system further includes an external interface, and the external interface is configured to transmit any data generated in the data management system to an external system by means of quantum communication.

In the solution of the embodiments of the present disclosure, the data management system for the yarn spindle product can transmit data to the external system via the external interface, and the data may include at least one of the encrypted work data, the first combined data or the second combined data in any work stage of the data management system for the yarn spindle product. According to the technical solution of the embodiments of the present disclosure, the quantum communication can be used in the data transmission process, thereby ensuring the security of data transmission from the data management system to the outside.

The above embodiments may be implemented in whole or in part by software, hardware, firmware or any combination thereof. When implemented by software, they may be implemented in the form of a computer program product in whole or in part. The computer program product includes one or more computer instructions. When the computer instructions are loaded and executed on a computer, the processes or functions described in the embodiments of the present disclosure are generated in whole or in part. The computer may be a general-purpose computer, a special-purpose computer, a computer network, or other programmable device. The computer instructions may be stored in a computer readable storage medium or transmitted from a computer readable storage medium to another computer readable storage medium. For example, the computer instructions may be transmitted from a website, computer, server or data center to another website, computer, server or data center in a wired (e.g., coaxial cable, optical fiber, and/or Digital Subscriber Line (DSL)) or wireless (e.g., infrared, Bluetooth, and/or microwave, etc.) way. The computer readable storage medium may be any available medium that can be accessed by a computer, or a data storage device such as server or data center that is integrated with one or more available media. The available media may be magnetic media (for example, floppy disk, hard disk, and/or magnetic tape), optical media (for example, Digital Versatile Disc (DVD)), or semiconductor media (for example, Solid State Disk (SSD)), etc. It is worth noting that the computer readable storage medium mentioned in the present disclosure may be a nonvolatile storage medium, in other words, may be a non-transitory storage medium.

Those having ordinary skill in the art can understand that all or some of the steps for implementing the above embodiments may be completed by hardware, or may be completed by instructing related hardware through a program. The program may be stored in a computer readable storage medium. The above-mentioned storage medium may be a read-only memory, a magnetic disk or an optical disk, etc.

In the description of the embodiments of the present disclosure, the description with reference to the terms "one embodiment", "some embodiments", "example", "specific example" or "some examples", etc. means that specific features, structures, materials or characteristics described in conjunction with the embodiment or example are included in at least one embodiment or example of the present disclosure. Moreover, the specific features, structures, materials or characteristics described may be combined in a suitable manner in any one or more embodiments or examples. In addition, those skilled in the art can integrate and combine different embodiments or examples and features of different embodiments or examples described in this specification without conflicting with each other.

In the description of the embodiments of the present disclosure, "/" represents or, unless otherwise specified. For example, A/B may represent A or B. The term "and/or" herein only describes an association relation of associated objects, which indicates that there may be three kinds of relations, for example, A and/or B may indicate that only A exists, or both A and B exist, or only B exists.

In the description of the embodiments of the present disclosure, the terms "first" and "second" are only for purpose of description, and cannot be construed to indicate or imply the relative importance or implicitly point out the quantity of technical features indicated. Therefore, the feature defined with "first" or "second" may explicitly or implicitly include one or more features. In the description of the embodiments of the present disclosure, "a plurality of" means two or more, unless otherwise specified.

The above descriptions are only exemplary embodiments of the present disclosure and not intended to limit the present disclosure. Any modifications, equivalent replacements, improvements and others made within the principle of the present disclosure shall be contained in the protection scope of the present disclosure.

## Claims

1. A data management system for a yarn spindle product, comprising a plurality of work node sets and a plurality of data aggregation servers corresponding one by one to a plurality of work stages in a spinning workflow;
wherein a first work node set corresponding to a first work stage in the spinning workflow among the plurality of work node sets comprises M work nodes corresponding one by one to M groups of operating devices in the first work stage; and each of the M work nodes (11, 12, 13) is configured to obtain work data to be processed according to operating status of the yarn spindle product in a group of operating devices corresponding to the work node, and process the work data to be processed into encrypted work data; wherein M is an integer greater than or equal to 2;
the first work node set is configured to obtain first combined data, wherein the first combined data comprises M pieces of encrypted work data obtained based on processing by the M work nodes (11, 12, 13);
a first data aggregation server corresponding to the first work stage among the plurality of data aggregation servers is configured to receive the first combined data, and decrypt the M pieces of encrypted work data comprised in the first combined data one by one to obtain M pieces of work data to be processed; and
the first data aggregation server is further configured to combine and then encrypt the M pieces of work data to be processed to obtain second combined data of the first work stage, and send the second combined data to a work node set or data aggregation server corresponding to a second work stage in the spinning workflow.

2. The system of claim 1, wherein the first combined data is transmission data of an M-th work node among the M work nodes (11, 12, 13); and
an i-th work node among the M work nodes (11, 12, 13) is further configured to obtain transmission data of the i-th work node based on encrypted work data processed by the i-th work node and transmission data sent by an (i-1)-th work node among the M work nodes (11, 12, 13), and send the transmission data of the i-th work node; wherein i is an integer not less than 2 and not greater than M.

3. The system of claim 2, wherein a first work node among the M work nodes (11, 12, 13) is configured to use encrypted work data processed by the first work node as transmission data of the first work node, and send the transmission data of the first work node to a second work node among the M work nodes (11, 12, 13).

4. The system of claim 2, wherein the i-th work node is configured to determine a plurality of pieces of work data of the yarn spindle product according to operating status of the yarn spindle product in a group of operating devices corresponding to the i-th work node, and use work data corresponding to a target data type among the plurality of pieces of work data as work data to be processed.

5. The system of claim 2, wherein the transmission data of the i-th work node comprises the encrypted work data processed by the i-th work node, the transmission data sent by the (i-1)-th work node, and other work data than work data corresponding to a target type among a plurality of pieces of work data determined by the i-th work node.

6. The system of any one of claims 1 to 5, wherein each work node uses a first encryption algorithm to process the work data to be processed into the encrypted work data; the first data aggregation server uses a second encryption algorithm to combine and then encrypt the M pieces of work data to be processed; and the first encryption algorithm is different from the second encryption algorithm.

7. The system of claim 6, wherein the first encryption algorithm comprises a first one-way hash encryption algorithm, a first symmetric encryption algorithm or a first asymmetric encryption algorithm.

8. The system of claim 6, wherein the second encryption algorithm comprises a second one-way hash encryption algorithm, a second symmetric encryption algorithm or a second asymmetric encryption algorithm.

9. The system of any one of claims 1 to 5, wherein the first data aggregation server is further configured to receive an encrypted task set, decrypt the encrypted task set to obtain a plurality of decrypted tasks, encrypt the plurality of decrypted tasks respectively to obtain a plurality of encrypted tasks, and send the plurality of encrypted tasks respectively to corresponding work nodes (11, 12, 13); and
each work node is further configured to receive an encrypted task, decrypt the received encrypted task to obtain a corresponding decrypted task, and distribute the decrypted task to an operating device for execution.

10. The system of any one of claims 1 to 5, further comprising an external interface; wherein the external interface is configured to transmit any data generated in the data management system to an external system by means of quantum communication.
